Europäisches Patentamt

European Patent Office

Office européen des brevets

(19)

(11) Numéro de publication : **0 146 456**
**B1**

(12)

# FASCICULE DE BREVET EUROPÉEN

(45) Date de publication du fascicule du brevet :
20.09.89

(51) Int. Cl.⁴ : **C 01 B 33/04, H 01 J 9/20**

(21) Numéro de dépôt : 84402474.5

(22) Date de dépôt : 03.12.84

(54) Procédé de production d'hydrures de silicium, application et appareil de mise en oeuvre.

(30) Priorité : 19.12.83 FR 8320267

(43) Date de publication de la demande :
26.06.85 Bulletin 85/26

(45) Mention de la délivrance du brevet :
20.09.89 Bulletin 89/38

(84) Etats contractants désignés :
AT BE CH DE FR GB IT LI LU NL SE

(56) Documents cités :
COMPTES RENDUS HEBDOMADAIRES DES SEAN-
CES DE L'ACADEMIE DES SCIENCES DE PARIS, vol.
242, février 1956, pages 784-785, Paris, FR; A. CHRE-
TIEN et al.: "Sur de nouvelles propriétés des combinaisons ternaires Ca3 Al6 Si2 et Ca2 Al4 Si3"
ZEITSCHRIFT FÜR ANORGANISCHE UND ALLGE-
MEINE CHEMIE, vol. 383, no. 3, juillet 1971, pages
303-313, Leipzig, DD; F. FEHER et al.: "Ein Verfahren
zur Darstellung höherer Silane"
ZEITSCHRIFT FÜR ANORGANISCHE UND ALLGE-
MEINE CHEMIE, vol. 385, no. 3, novembre 1971,
pages 202-208, Leipzig, DD; F. FEHER et al.: "Darstellung von Rohsilan in einem 1-L-Reaktor"
CHEMICAL ABSTRACTS, vol. 82, no. 10, 10 mars
1975, page 242, colonne de droite, réf. no. 61359p,
Columbus, Ohio, US; & JP - A - 74 98 399 (K. TACHIKI
et al.) 18.09.1974

(73) Titulaire : L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cédex 07 (FR)

(72) Inventeur : Belot, Dominique
14, rue des Deux Frères
F-78150 Le Chesnay (FR)
Inventeur : Rade, Jean-Yves
23, avenue Charles de Gaulle-Collège C. Péguy
F-78150 Le Chesnay (FR)
Inventeur : Piffard, Jean-François
3, rue du Docteur Emile Roux
F-92150 Suresnes (FR)
Inventeur : Larquet, Christian
55, rue Benoit Frachon
F-78280 Guyancourt (FR)
Inventeur : Cornut, Philippe
13, avenue du Saut du Loup
F-78170 La Celle-Saint-Cloud (FR)

(74) Mandataire : Sadones Laurent, Renée et al
L'AIR LIQUIDE 75, quai d'Orsay
F-75321 Paris Cédex 07 (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention a trait à la production des hydrures de silicium par hydrolyse acide d'alliages ternaires de silicium.

Le silane (ou monosilane, ou tétrahydrure de silicium : $SiH_4$) est principalement utilisé comme vecteur de silicium dans la technique des dépôts en phase vapeur. Pour la fabrication des semiconducteurs, notamment dans la technique V.L.S.I. (Very Large Scale Integration), des dépôts de silicium polycristallin, de silice, de nitrure de silicium sont réalisés en employant le silane comme vecteur de silicium.

Les dépôts en couche mince de silicium polycristallin, obtenu à partir de silane, permettent de fabriquer des piles solaires ayant un rendement énergétique supérieur à 6 %.

On peut également obtenir, sur les métaux des revêtements résistant à la corrosion par les acides, par craquage de silane.

Enfin, le silane est susceptible de s'additionner sur les liaisons multiples des hydrocarbures insaturés pour donner des organosilanes.

De nombreuses voies de synthèse du silane ont été proposées, mais trois seulement semblent avoir connu un développement industriel.

La méthode dite des sels fondus consiste à réduire un chlorosilane par l'hydrure de lithium, à température de l'ordre de 450 ºC, dans un bain fondu de chlorure de lithium — chlorure de potassium. Cette technique présente l'avantage de produire directement du silane de bonne pureté ; par contre, elle a le désavantage de conduire à un prix de revient élevé, et de nécessiter la manipulation généralement peu aisée de sels fondus. Une variante de cette technique a été envisagée par Sundermeyer, Glemser Angew. Chem. 70, p. 625 (1958). Elle consiste à électrolyser in situ, le chlorure de lithium pour fabriquer du lithium qui est transformé en hydrure par introduction d'hydrogène dans le réacteur. Ce procédé n'est pas exploité industriellement, principalement en raison de difficultés technologiques.

Selon la méthode de réduction du chlorure de silicium par l'hydrure de lithium aluminium, on effectue la réaction au voisinage de la température ambiante dans un solvant lourd tel le diglyme ou le tétraglyme. Ce procédé de fabrication n'est plus mis en oeuvre en raison de son coût beaucoup trop onéreux et du fait de la dégradation du solvant, qui pollue fortement le silane par des hydrocarbures, ce qui exige, une épuration poussée.

On connaît également la méthode par hydrolyse d'alliages de silicium, divers alliages binaires ont été considérés tel CaSi, $CaSi_2MgSi$ et $Mg_2Si$. Selon E. Wiberg, Hydrides, Elsevier N.Y. 1971 p. 473, parmi ces alliages, seul le siliciure de magnésium conduit à un rendement pouvant présenter un certain intérêt. Toutefois, l'attaque de ce composé donne des taux de transformation en silane variables selon les conditions opératoires. Il apparaît que le rendement est fortement lié à la taille des grains de siliciure de magnésium, à la vitesse d'introduction de la poudre du composé, à la température de réaction et au sens de la mise en contact des réactifs.

Selon une variante du procédé on obtient un rendement en silane de l'ordre de 80 % par rapport au silicium en réalisant l'attaque du siliciure de magnésium par le chlorure d'ammonium en milieu ammoniac liquide.

Par la publication de F. Fehrer, dans Zeitschrift für anorganische und allgemeine Chemie, page 208, volume 385, novembre 1971, on connaît les conditions réactionnelles adaptées à la décomposition d'une composition binaire : le siliciure de magnésium, pour obtenir du silane. Selon ces conditions, il est préconisé l'utilisation d'une poudre de siliciure de magnésium ayant une granulométrie entre 0,3 et 1 millimètre, introduite aussi rapidement que possible dans de l'acide phosphorique à 20-22 %, la mise en œuvre de la dite réaction étant fixée à une température de décomposition de 50 à 60 ºC.

Le principe de l'attaque du siliciure de magnésium présente l'avantage de relever d'une chimie simple et de produire du silane dont la principale impureté constituée par l'eau est aisément éliminable.

Par contre, la transposition à l'échelle industrielle de l'hydrolyse du siliciure de magnésium a deux inconvénients majeurs, d'ordre économique et technique. Ce produit de départ, dont la préparation requiert un appareillage spécial, et ayant pour seule application actuelle la production de silane, est un produit cher. D'autre part, comme l'obtention de bons rendements est dépendante de la conduite de la réaction en présence d'ammoniac liquide, il y a nécessité de travailler sous une pression de l'ordre de 6 atmosphères, puis d'effectuer une séparation silane/ammoniac très efficace.

En 1956, Chrétien, Freundich et Deschanvres au cours de leurs travaux sur les alliages ternaires $Ca_3Al_6Si_2$ et $Ca_2Al_4Si_3$ avaient remarqué que ces composés sensibles aux acides produisaient par attaque par l'acide chlorhydrique dilué un dégagement de gaz spontanément inflammable à l'air (silane) (CR Acad. Sciences 6 février 1956 p. 784-5).

Ces travaux de laboratoire ne donnaient pas les conditions nécessaires à la réalisation d'un procédé rentable, et n'ont pas connu un développement industriel.

Il a été trouvé un procédé simple, utilisant des matières premières peu coûteuses et produisant des hydrures de silicium avec un rendement industriel.

Au lieu d'utiliser des alliages binaires, selon l'invention, on fait réagir un alliage ternaire industriel représenté par la formule Al 30-38 %, Ca 15-25 %, Si 35-45 % contenant au moins 20 % de silicium allié, avec un acide choisi parmi les hydracides et l'acide orthophosphorique de concentration comprise entre 2N et 6N, en additionnant dans l'acide l'alliage ternaire sous forme de poudre fine, de granulométrie au plus égale à 0,4 millimètre, la réaction étant conduite à température au moins égale à 50 °C, la poudre métallique étant introduite dans l'acide à une vitesse telle que la température réactionnelle n'excède pas 90 °C.

Les alliages Al/Si/Ca choisis sont des alliages de fonderie, courants et bon marché. Parmi les alliages disponibles, on a choisi les alliages Al 30-38 %, Si 35-45 %, Ca 15-25 %, particulièrement performants et donnant de très bons résultats. Ce type d'alliage industriel étudié peut donner un kilo de silane pour 10 kg d'alliage. Dans les mêmes conditions un autre alliage industriel Al 11 %, Si 58 %, Ca 28 %, faisant partie de l'invention, donne 1 kg de silane pour 18 kg d'alliage.

Le sens de l'addition de la poudre et de l'acide à une action déterminante sur le rendement de l'alliage. Des expériences conduites sur l'alliage Al 33 %, Ca 18 %, Si 40 % dans les mêmes conditions ont montré que 18 kg d'alliage sont nécessaires pour produire 1 kg de silane quand on fait réagir l'acide sur la poudre ; tandis que par addition de la poudre dans l'acide on fabrique 1 kg de silane à partir de seulement 10 kg d'alliage. Dans les conditions d'expérimentation, l'addition de poudre d'alliage sur la solution acide agitée peut se faire à raison de 4 à 8 kilogrammes par heure, sachant qu'un débit plus important accroît la réactivité du système.

Parmi les hydracides on peut choisir les acides fluorhydrique, chlorhydrique et orthophosphorique dilués, de concentration comprise entre 2N et 6N, de préférence environ 3N.

Les influences de la nature et de la concentration de l'acide sur le rendement de l'alliage en silane ont été étudiées sur l'alliage Al 33 %, Ca 18 %, Si 40 %, en faisant réagir la poudre sur l'acide, toutes les autres conditions étant semblables par ailleurs. Avec l'acide orthophosphorique 3N on obtient 1 kg de silane à partir de 14 kg d'alliage, et par action de l'acide chlorhydrique 3N, 10 kg d'alliage sont seulement nécessaires pour produire 1 kg de silane. L'acide chlorhydrique N ne permet d'obtenir 1 kg de silane qu'en faisant réagir 125 kg d'alliage, tandis que 16 kg et 10 kg d'alliage sont seulement employés pour libérer 1 kg de silane avec HCl 6N et 3N. Par rapport à l'alliage, l'acide chlorhydrique est mis en oeuvre dans des proportions relatives de 10 à 25 litres d'acide par kilogramme de poudre, et dans les conditions expérimentales, le choix de 15 à 16 litres représente un bon compromis.

La réaction poudre d'alliage sur acide peut s'effectuer à la température ambiante, mais on a remarqué que la cinétique croît avec la température, et que l'acide chlorhydrique requiert la conduite de la réaction à température au moins égale à 50 °C. Pour accélérer la cinétique, il convient de chauffer jusqu'à environ 70 °C. La température maximale de travail est limitée par la température d'ébullition de la solution, et pratiquement vers 90 °C ; la poudre métallique étant introduite à une vitesse telle que la température réactionnelle ne dépasse pas les 90 °C.

Il a également été découvert que la granulométrie de la poudre a une influence sur la cinétique et en conséquence sur le rendement. La cinétique croit lorsque la taille des particules diminue. La formation de mousses constitue le facteur limitant la taille des particules. La granulométrie de la poudre de l'alliage ternaire industriel doit être au plus égale à 0,40 mm. Une granulométrie inférieure à 0,2 mm convient bien au type de réaction. Toutes conditions égales par ailleurs, lorsque la taille des particules est divisée par 10, la quantité de silane produite dans le même temps est multiplié par environ 15.

L'utilisation de tout alliage industriel à base de silicium, calcium et aluminium, présentant dans sa composition les éléments définis $Si_3Ca_2Al_4$ ou le silicium de magnésium, $Mg_2Si$ en tant qu'additif introduit en quantité représentant au moins 10 % en poids de l'ensemble des alliages soumis à l'hydrolyse et inférieure à 50 %, permet d'accroître sensiblement le rendement du procédé.

L'importance du taux de silicium allié $Si_3Al_4Ca_2$ a été constatée. Plus le taux de silicium allié (tsa) est élevé dans l'alliage — toutes les conditions opératoires étant équivalentes par ailleurs — plus le rendement, c'est-à-dire la masse des produits totaux formés s'accroît. On choisira, de préférence, un alliage contenant du silicium allié ; dès un taux de silicium allié de l'ordre de 20 %, on observe une augmentation sensible de rendement de formation des hydrures de silicium. Une variation de 20 à 30 % du taux de silicium allié peut correspondre à un accroissement de plus de 30 % des hydrures de silicium totaux formés. L'influence du taux de silicium allié est déterminante sur la teneur en disilane, celle-ci peut être augmentée d'environ 80 %. Une élévation de la teneur des alliages en silicium allié, voire 40 %, ne peut être que favorable à la formation des hydrures de silicium, et grand est l'intérêt de l'utilisation d'alliage à forte teneur en silicium allié, celle-ci n'étant limitée que par les possibilités technologiques de fabrication des alliages.

Le gaz brut en sortie de la zone réactionnelle est constitué d'hydrogène et d'hydrures de silicium ; silane $SiH_4$, disilane $Si_2H_6$, trisilane $Si_3H_8$ et polysilanes ou silanes supérieurs $Si_nH_{2n+2}$ n > 3.

Les hydrures de silicium sont condensés sous forme solide, éventuellement par piégeage dans des mélanges réfrigérants tels glace et eau, ou cryogéniques tels l'azote liquide. Une séparation par évaporation fractionnée sous vide partiel, permet d'obtenir trois fractions, chacune étant ensuite soumise à une purification, par exemple, selon la technique de la chromatographie préparative en phase gazeuse.

La première fraction correspondant au silane, $SiH_4$ est isolée par évaporation à une température de — 78 °C sous un vide de 300 mbar, $3 \cdot 10^4$ Pa.

La deuxième fraction correspondant au dilisane, c'est-à-dire constituée pratiquement pour 80 % par du disilane et du trisilane à raison d'au moins 15 % et le complément en silane, est séparée à 0 °C, sous un vide de 500 mbar, $5 \cdot 10^4$ Pa.

La troisième fraction, correspondant aux silanes supérieurs lourds ou polysilanes $Si_nH_{2n+2}n \geqslant 3$, en particulier au trisilane, dans une proportion d'au moins 75 %, avec un complément de l'ordre de 22 % en disilane, et de l'ordre du pourcent en silane, est séparée par chauffage à + 80 °C, sous 100 mbar, $1 \cdot 10^4 Pa$.

La zone réactionnelle est maintenue à l'abri de l'air et en fin de réaction l'alliage n'ayant pas réagi est neutralisé, la zone réactionnelle est purgée à l'azote ainsi que toutes les parties annexes de cette zone et la zone de fractionnement.

L'hydrogène et les produits gazeux formés dans la réaction après séparation des hydrures de silicium, sont collectés, et après filtration récupérés ou brûlés.

Le procédé de fabrication des hydures de silicium est mis en oeuvre, dans un réacteur (1) étanche équipé de moyens de chauffage tel une double circulation d'eau (2) obturé à la partie supérieure par la plaque (3) dans laquelle s'insère de manière étanche l'agitateur (4), la canalisation (5) alimentée en acide, dont le débit est contrôlé par la vanne (6), la sonde de température (7), le système d'alimentation en poudre d'alliage. La poudre (8) est acheminée vers le réacteur par l'intermédiaire de la trémie distributrice étanche (9) puis de la canalisation (10), la vitesse d'introduction de la poudre étant contrôlée et régulée par le système (11), la poudre est additionnée dans le bain d'acide (12) de concentration diluée, sous agitation. La vapeur d'eau et les produits gazeux s'échappent par la canalisation d'évacuation (13) vers le condenseur d'eau (14). En cas de surpression dans le réacteur, on dispose du système (15) en relation avec une trompe à eau.

Les produits gazeux : hydrogène et hydrures de silicium s'échappent à la partie supérieure du condenseur (14), après circulation dans la canalisation (16) ils sont filtrés dans le filtre (17), en vue de l'élimination des traces et poussières métalliques, ensuite par le circuit (18), ils sont dirigés vers la série des pièges cryogéniques étanches à l'air (19) (20) et (21) où les hydrures de silicium sont condensés à la température de l'azote liquide. La majeure partie des hydrures de silicium sont condensés dans le premier piège, les deux derniers ayant surtout un rôle de sécurité. Les pièges sont munis de contrôle de pression.

Après condensation des hydrures de silicium dans le piège (19), l'hydrogène est évacué à la partie supérieure du piège par l'intermédiaire du conduit (22A) vers le circuit d'évacuation de l'hydrogène (23) vers la torchère de brûlage des gaz combustibles. A la fin de la traversée des autres pièges, les incondensables sont filtrés, récupérés par (22B) introduits dans le circuit d'évacuation (23).

Le circuit (18), du filtre (17) à la sortie du dernier piège, est muni dans chaque tronçon de moyens d'ouverture et de fermeture, tels vannes, permettant d'isoler chaque piège et de contrôler l'entrée et la sortie des produits gazeux y pénétrant ou s'en échappant.

Après condensation des hydrures de silicium et évacuation des incondensables, les pièges cryogéniques sont ensuite réchauffés par apport externe de chaleur et mis sous vide, la température et le vide étant régulés à des valeurs précises correspondant à chacune des fractions, qui après évaporation fractionnée est stockée dans une bouteille, avant purification.

L'installation comprend en outre un circuit d'azote (24) destiné à la purge et au balayage de l'ensemble des appareils : réacteur, trémie, filtres et des différents pièges, après la fin de réaction. Les divers tronçons 24A, 24B, 24C, 24D et 24E sont munis de vannes.

L'appareillage comporte aussi la pompe à vide (25) protégée par le piège cryogénique (26) de tout entraînement éventuel d'hydrures de silicium. Les produits gazeux non condensés dans le piège sont canalisés par la canalisation (22C) vers le circuit de récupération d'hydrogène (23) conduisant à la torchère.

De plus, la partie inférieure du réacteur (1) est en relation avec le bac de neutralisation (27) par l'intermédiaire de la canalisation (28). Dans ce bac le milieu réactionnel est vidangé et neutralisé.

Il est donné ci-après des exemples illustrant l'invention à titre non limitatif.

## Exemple 1.

Réactif :
Poudre d'alliage. Al 35 %, Ca 18 %, Si 40 %..
Granulométrie < 0,2 mm.
Acide chlorhydrique 3,4 N (12 % W).
Proportions relatives : 15 litres d'acide par kilogramme d'alliage.
Conditions opératoires :
Addition de la poudre sur la solution acide agitée ;
température de départ du milieu réactionnel : 50 °C ;
température d'équilibre de la réaction : 75 °C ;
Vitesse d'addition de l'alliage 8 kg/heure.
Le gaz brut en sortie de réacteur a la composition volumique :

| | |
|---|---|
| hydrogène | 65 % |
| hydrures minéraux | 35 % |

L'évaporation fractionnée sous vide partiel permet d'obtenir trois fractions de compositions massiques suivantes :

1ère fraction :
(— 78 °C, 3·10⁴ Pa)

$SiH_4$     97 %
$Si_2H_6$     2,5 %
autres impuretés     0,5 %

2ème fraction :
(0 °C, 5·10⁴ Pa)

$SiH_4$     4,5 %
$Si_2H_6$     79 %
$Si_3H_8$     16 %
autres impuretés     0,5 %

3ème fraction :
(80 °C, 1·10⁴ Pa)

$SiH_4$     1,5 %
$Si_2H_6$     22 %
$Si_nH_{2n+2}$     76,5 %     $n \geqslant 3$

Produits obtenus après séparation et purification.

70 kg d'alliage et 1 100 litres d'acide chlorhydrique permettent de fabriquer : 3,3 kg de silane $SiH_4$, 1 kg de disilane et 1,3 kg de polysilanes ou silanes supérieurs.

Les deux premières fractions sont traitées en vue de l'obtention de silane et de disilane de qualité électronique.

La troisième fraction permet notamment de remplacer le silane dans le procédé d'opalisation d'ampoules par voie sèche.

Les hydrures de silicium sont également utilisables dans d'autres secteurs tels les cellules photovoltaïques et les tambours photocopieurs.

## Exemple 2.

Réactifs :
Poudre d'alliage. Al 31,9 %, Ca 23,5 %, Si 38,2 %, Fe 2,9 %.
Taux silicium allié 32,9 % ;
Granulométrie ≤ 0,4 millimètre ;
Acide chlorhydrique 3,4 N (12 % W) ;
Proportions relatives : 16 litres d'acide par kilogramme d'alliage ;
Conditions opératoires.
Addition de la poudre sur la solution acide agitée ;
Température de départ du milieu réactionnel : 50 °C ;
Température d'équilibre de la réaction : 80 — 90 °C ;
Vitesse d'addition de l'alliage 8 kg/heure.
Le gaz brut en sortie de réacteur a la composition volumique suivante :

hydrogène·environ     35 %
hydrures minéraux     65 %

L'évaporation fractionnée sous vide partiel selon les mêmes conditions de l'exemple précédent permet, à partir de 4 kg d'alliage de départ, d'obtenir trois fractions :

1ère fraction :
(— 78 °C, 3·10⁴ Pa)     352 g
2ème fraction :
(0 °C, 5·10⁴ Pa)     154 g
3ème fraction :
(80 °C, 1·10⁴ Pa)     165 g
    671 g

## Exemple 3.

Réactifs :
Poudre d'alliage. Al 30,9 %, Ca 21 %, Si 42 %, Fe 3,1 %..
Taux de silicium allié 23,1 %.
Granulométrie ≤ 0,2 millimètre.
Acide chlorhydrique 3,4 N (12 % W).
Proportions relatives : 16 litres d'acide par kilogramme d'alliage.
Conditions opératoires.
Addition de la poudre sur la solution acide agitée ;
Température de départ du milieu réactionnel : 50 °C ;
Température d'équilibre de la réaction : 80 — 90 °C ;

Vitesse d'addition de l'alliage : 8 kg/heure ;
Le gaz brut en sortie de réacteur a la composition volumique suivante :

| | |
|---|---|
| hydrogène : | environ 50 % |
| hydrures minéraux : | 50 % |

L'évaporation fractionnée sous vide partiel, selon les conditions de l'exemple permet, à partir de 4 kg d'alliage de départ, d'obtenir trois fractions :

| | |
|---|---|
| 1ère fraction : | |
| ($-$ 78 °C, $3 \cdot 10^4$ Pa) | 273 g |
| 2ème fraction : | |
| (0 °C, $5 \cdot 10^4$ Pa) | 109 g |
| 3ème fraction : | |
| (80 °C, $1 \cdot 10^4$ Pa) | 126 g |
| | 508 g |

L'analyse type des trois fractions en sortie de production, sans purification, pour les deux exemples précédents est la suivante :

| | Fraction 1 phase gaz | Fraction 2 phase gaz | Fraction 2 phase liquide | Fraction 3 phase gaz |
|---|---|---|---|---|
| légers | 0,5 | 0,15 | 1 | 0,09 |
| $SiH_4$ | 98,75 | 42,6 | 3,52 | 20,3 |
| $pH_3$ | 0,04 | 0,23 | 0,043 | 0,033 |
| $H_2S$ | 0,06 | 1 | 0,18 | 0,179 |
| $AsH_3$ | | | 0,006 | 0,006 |
| $Si\,H_3OSi\,H_3$ | 0,03 | 2,7 | 5,86 | 0,69 |
| $Si_2H_6$ | 0,56 | 52,3 | 85,8 | 68,75 |
| $Si\,H_3\,OSi\,H_2\,Osi\,H_3$ | | 0,11 | 0,096 | 0,01 |
| $Si_2H_5OSi\,H_3$ | | 0,015 | 0,248 | 0,115 |
| $Si_3H_8$ | 0,048 | 0,91 | 3,37 | 9,83 |
| $Si_4H_{10}$ | | 0,026 | 0,018 | |

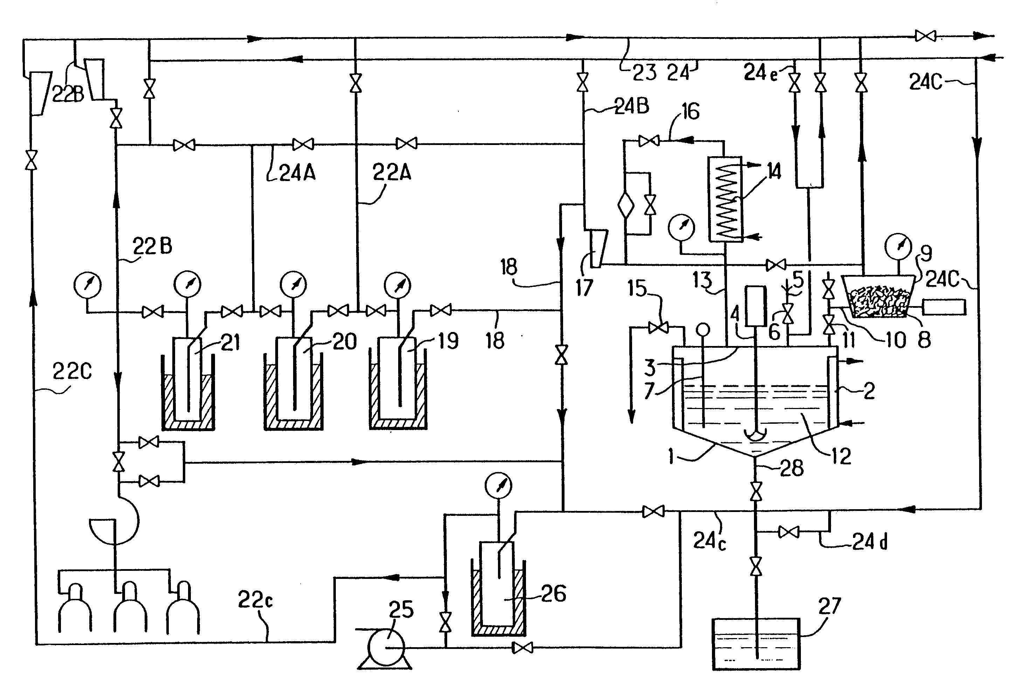

## Revendications

1. Procédé de fabrication des hydrures de silicium par hydrolyse, avec un acide dilué, d'alliages ternaires de silicium de formule générale $Al_xSi_zCa_y$, caractérisé en ce que l'on fait réagir un alliage ternaire industriel représenté par la formule Al 30-38 %, Ca 15-25 %, Si 35-45 % contenant au moins 20 % de silicium allié, avec un acide choisi parmi les hydracides et l'acide orthophosphorique de concentration comprise entre 2N et 6N, en additionnant dans l'acide l'alliage ternaire sous forme de poudre fine, de granulométrie au plus égale à 0,4 millimètre, la réaction étant conduite à température au moins égale à 50 °C, la poudre métallique étant introduite dans l'acide à une vitesse telle que la température réactionnelle n'excède pas 90 °C.

2. Procédé de fabrication des hydrures de silicium selon la revendication 1, caractérisé en ce que l'on conduit l'hydrolyse acide de l'alliage ternaire en présence d'un additif constitué de siliciure de magnésium introduit en quantité représentant au moins 10 % en poids de l'ensemble des alliages soumis à l'hydrolyse et inférieure à 50 %.

3. Procédé de fabrication des hydrures de silicium selon la revendication 1, caractérisé en ce que les divers hydrures préparés : silane, disilane, trisilane et polysilane sont condensés sous forme solide, puis séparés par évaporation fractionnée sous vide partiel, chaque fraction étant ensuite soumise à une purification.

4. Procédé de fabrication des hydrures de silicium selon la revendication 3, caractérisé en ce que la première fraction correspondant au silane est isolée par évaporation à $-$ 78 °C sous $3 \cdot 10^4$ pascal, la deuxième fraction correspondant au disilane est isolée par évaporation à 0 °C sous $5 \cdot 10^4$ pascal et la troisième fraction correspondant aux polysilanes $Si_nH_{2n+2}$ $n \geqslant 3$ est séparée à $+ 80$ °C sous $1 \cdot 10^4$ pascal.

5. Procédé de fabrication des hydrures de silicium selon la revendication 4, caractérisé en ce que la zone réactionnelle est maintenue à l'abri de l'air, en fin de réaction l'alliage n'ayant pas réagi est neutralisé, la zone réactionnelle est purgée à l'azote, ainsi que toutes parties annexes de la dite zone et la zone de fractionnement.

EP 0 146 456 B1

6. Application des hydrures de silicium préparés selon la revendication 4, obtenus à partir des deux premières fractions, après purification, dans l'industrie des composants électroniques, et connexes, et de la troisième fraction à l'opalisation des ampoules par voie sèche.

7. Appareillage de mise en œuvre du procédé de fabrication des hydrures de silicium selon la revendication 3, constitué par un réacteur étanche (1) équipé de moyens de chauffage (2), d'introduction de la poudre d'alliage par l'intermédiaire de la trémie distributrice étanche (9), puis d'un condenseur d'eau (14) d'une série de pièges cryogéniques (19) (20) et (21) des hydrures de silicium, d'un circuit (22, 23) de récupération et d'évacuation de l'hydrogène, d'une pompe à vide (25) protégée par un piège cryogénique (26), d'un circuit de balayage et de purge par azote (24) et d'un bac de neutralisation (27).

**Claims**

1. Process for producing silicon hydrides by hydrolysis, with a dilute acid, of ternary silicon alloys of the general formula $Al_xSi_2Ca_y$, characterised in that an industrial ternary alloy, represented by the formula Al 30-38 %, Ca 15-25 %, Si 35-45 %, containing at least 20 % alloyed silicon, is reacted with an acid selected from among hydracids and orthophosphoric acid, in a concentration between 2N and 6N, by adding into the acid the ternary alloy in the form of fine powder of a granulometry at most equal to 0.4 mm, the reaction being conducted at a temperature of at least 50 °C, the metal powder being introduced into the acid at a rate such that the reaction temperature does not exceed 90 °C.

2. Process for producing silicon hydrides according to claim 1, characterised in that acid hydrolysis of the ternary alloy is conducted in the presence of an additive formed of magnesium silicide introduced in a quantity representing at least 10 % by weight of all the alloys subjected to the hydrolysis and less than 50 %.

3. Process for producing silicon hydrides according to claim 1, characterised in that the various prepared hydrides, silane, disilane, trisilane and polysilane, are condensed in solid form, then separated by fractional evaporation under partial vacuum, each fraction then being subjected to a purification.

4. Process for producing silicon hydrides according to claim 3, characterised in that the first fraction corresponding to silane is isolated by evaporation at — 78 °C under $3 \cdot 10^4$ pascal, the second fraction corresponding to disilane is isolated by evaporation at 0 °C under $5 \cdot 10^4$ pascal and the third fraction corresponding to polysilanes $Si_nH_{2n+2}$ wherein $n \geqslant 3$ is separated at + 80 °C $1 \cdot 10^4$ pascal.

5. Process for producing silicon hydrides according to claim 4, characterised in that the reaction zone is shielded from contact with air, at the end of reaction the alloy that has not reacted is neutralized, and the reaction zone, all its accessory parts and the fractionating zone are purged with nitrogen.

6. Use of the silicon hydrides prepared according to claim 4, obtained from the two first fractions, after purification, in the electronic component industry and related industries, and from the third fraction, for opalization of bulbs by the dry method.

7. Equipment for implementing the process for producing silicon hydrides according to claim 3, comprising a fluid-and-air-tight reactor (1) equipped with heating means (2), means for introducing the alloy powder by the fluid-and-air-tight distributing hopper (9), and additionally a water condenser (14), a series of cryogenic traps (19) (20) and·(21) for the silicon hydrides, a circuit (22, 23) for recovering and evacuating the hydrogen, a vacuum pump (25) protected by a cryogenic trap (26), a circuite for scavenging and purging with nitrogen (24) and a neutralization tank (27).

**Patentansprüche**

1. Verfahren zur Herstellung von Siliziumwasserstoffen durch Hydrolyse mit einer verdünnten Säure aus ternären Siliziumlegierungen der allgemeinen Formel $Al_xSi_2Ca_y$, dadurch gekennzeichnet, daß man eine industrieübliche ternäre Legierung, dargestellt durch die Formel Al 30-38 %, Ca 15-25 %, Si 35-45 %, die wenigstens 20 % legiertes Silizium enthält, mit einer Säure reagieren läßt, die unter Wasserstoffsäuren und Orthophosphorsäure in einer Konzentration zwischen 2N und 5N ausgewählt wurde, wobei die ternäre Legierung der Säure in Form eines feinen Pulvers mit einer Körnung von höchstens 0,4 mm zugesetzt wird und die Reaktion bei einer Temperatur von wenigstens 50 °C vonstatten geht, während das Metallpulver in die Säure mit einer Geschwindigkeit eingeleitet wird, aufgrund derer die Reaktionstemperatur 90 °C nicht überschreitet.

2. Verfahren zur Herstellung von Siliziumwasserstoffen nach Anspruch 1, dadurch gekennzeichnet, daß man die saure Hydrolyse der ternären Legierung in Anwesenheit eines Zusatzes durchführt, der aus Magnesiumsilizid besteht, welches in einer Menge von wenigstens 10 Gew.% der gesamten Legierungen, welche der hydrolyse unterzogen werden, und höchstens 50 °C eingeleitet wird.

3. Verfahren zur Herstellung von Siliziumwasserstoffen nach Anspruch 1, dadurch gekennzeichnet, daß die verschiedenen hergestellten Hydride : Silan, Disilan, Trisilan und Polysilan in fester Form kondensiert und anschließend durch fraktionierte Verdampfung unter einem Teilvakuum getrennt werden, wobei jede Fraktion anschließend einer Reinigung unterzogen wird.

4. Verfahren zur Herstellung von Siliziumwasserstoffen nach Anspruch 3, dadurch gekennzeichnet,

7

daß die erste, dem Silan entsprechende Fraktion durch Verdampfung bei — 78 °C unter $3 \cdot 10^4$ Pascal, die zweite, dem Disilan entsprechende Fraktion durch Verdampfung bei 0 °C unter $5 \cdot 10^4$ Pascal und die dritte, den Polysilanen $Si_nH_{2n+2}$ $n \geqslant 3$ bei + 80 °C unter $1 \cdot 10^4$ Pascal isoliert wird.

5. Verfahren zur Herstellung von Siliziumwasserstoffen nach Anspruch 4, dadurch gekennzeichnet, daß die Reaktionszone luftfrei gehalten wird, daß die von der Reaktion nicht erfaßte Legierung bei Reaktionsende neutralisiert wird und daß die Reaktionszone sowie alle an diese zone und an die Fraktionszone angrenzenden Teile mit Stickstoff gespült werden.

6. Anwendung der nach Anspruch 4 hergestellten Siliziumwasserstoffe, die aus zwei ersten Fraktionen erzielt wurden, nach Reinigung in der Elektronik-Bauteil-Industrie und verwandten Industriezweigen, und Anwendung der dritten Fraktion bei der Trockenopalisierung von Glühbirnen.

7. Apparatur für die Anwendung des Herstellungsverfahrens für Siliziumwasserstoffe nach Anspruch 3, bestehend aus einem dichten Reaktionsgefäß (1), ausgerüstet mit Vorrichtungen zur Beheizung (2), zur Einleitung des Legierungspulvers über den dichten Verteilungstrichter (9), einem Wasserkondensator (14), einer Reihe von Rühlfallen (19) (20) und (21) für Siliziumwasserstoffe, einem Kreislauf (22, 23) zur Rückgewinnung und Abführung des Wasserstoffs, einer Vakuumpumpe (25), die durch eine Kühlfalle (26) geschützt ist, einem Stickstoff-Reinigungs- und Spülkreislauf (24) und einem Neutralisationsbehälter (27).